# EUROPEAN PATENT SPECIFICATION

(11) **EP 0 545 680 B1**
(45) Date of publication and mention of the grant of the patent: **07.12.1994**
(21) Application number: 92310989.6
(22) Date of filing: 02.12.1992
(51) Int. Cl.: E05F 3/12, F16F 9/52

(54) **Floor hinge**
Fussbodentürschliesser
Ferme-porte de sol

(30) Priority: 06.12.1991 JP 108963/91 U
(43) Date of publication of application: 09.06.1993
(73) Proprietor: RYOBI LTD., Fuchu-shi, Hiroshima-ken (JP)
(72) Inventor: Yamane, Motoharu, c/o Ryobi Limited, Fuchu-shi, Hiroshima-ken (JP)
(74) Representative: Heath, Peter William Murray

(56) References cited:
- DE-A- 3 320 069
- US-A- 3 137 888
- US-A- 4 010 829

## Description

### BACKGROUND OF THE INVENTION

The present invention relates to a floor hinge in which a door opening rotational force of a door is converted into a linear motion, a piston is moved while accumulating a return spring by a door opening action, and the piston is then returned to an original position by the accumulated force of the return spring having a body case in which a piston is slidably accommodated. The piston divides a cylinder space in the body case into a piston front chamber and a piston rear chamber. An output shaft connected to a door is associated with a rotational motion-linear motion converting mechanism including a cam mechanism, and the open and close movement is transmitted, through the rotational motion-linear motion converting mechanism, to the piston. In response to the movement of the piston, working oil is moved between the piston front and rear chambers.

In such a floor hinge, since the cylinder space is filled with the working oil without air therein, there would be in danger of breakage of the body case of the floor hinge because the working oil in the cylinder space is thermally especially during summer time expanded during summer time to increase remarkably the pressure of the cylinder space. Due to the breakage of the body case, the cylinder space may include air therein, and the air is moved between the piston front and rear chambers. Therefore, an oil pressure control circuit cannot be correctly operated to obtain a delayed action, a first speed door closing action, a second speed door closing action and a latching action. Further, a back check action is not operated at a predetermined angle.

### THE INVENTION

It is an object of this invention to provide a floor hinge in which a piston can be correctly controlled by an oil pressure control circuit irrespective of thermal expansion of working oil in a cylinder space especially during summer time.

US-A-3137888, which is regarded as the closest prior art according to the preamble of claim 1, discloses an overhead door closer with a valve system for equalising pressures to ensure smooth operation of a door at all temperatures.

DE-A-3320069 shows an oil damper incorporating a flexible membrane.

According to this invention, there is provided a floor hinge having a body case, an output shaft projected from the body case to be connected to a door, and a piston connected to the output shaft through a rotational motion-linear motion converting mechanism (A) for converting rotational motion of the output shaft into linear motion of the piston, the piston being moved reciprocatingly in the body case, and dividing a cylinder space (S) into two first and second piston chambers, working oil being moved between the two first and second piston chambers in response to rotational movement of the output shaft, whereby the body case is provided with an oil pressure absorption means (M) for absorbing increase of oil pressure due to expansion of the working oil, said oil pressure absorption means (M) comprising an opening formed at a position corresponding to either of the two first and second piston chambers in the body case, characterised in that said oil absorption means further comprises an elastic diaphragm for closing said opening and a plug for fastening the diaphragm in the opening, said plug having a cup-like shape to form an air-sealed space in cooperation with the diaphragm, and said plug being screw-engaged with the opening, and said opening is provided with a step portion to which a peripheral portion of the diaphragm is fastened.

Further objects, features and other aspects of this invention will be understood from the following detailed description of the preffered embodiments of this invention with reference to the drawings.

### BRIEF DESCRIPTION OF THE DRAWINGS

In the accompanying drawings:
FIG. 1 is a vertical sectional view showing a floor hinge of this invention;
FIG. 2 is a bottom view of the floor hinge; and
FIG. 3 is an enlarged view of an essential part of this invention.

### DESCRIPTION OF THE PREFERRED EMBODIMENTS

A floor hinge according to embodiments of the present invention will now be described with reference to the accompanying drawings.

The floor hinge may be applied to any type of a right swing door, a left swing door and a biparting door. The floor hinge includes an output shaft 1 connected to the door and serving as a rotary shaft of the door and a main piston 3 connected to the output shaft 1 by a rotational motion-linear motion converting mechanism A which uses a cam mechanism for converting rotational motion of the output shaft (1) into linear motion of the main piston 3. The piston 3 divides a cylinder space S formed in a body case 6 into two piston front and rear chambers 4, 5, and is reciprocatingly moved by the rotation of the output shaft 1 in response to the door opening action to thereby compress a return spring 2. Then, the piston 3 is returned back to the original position by the returning force of the return spring 2 to thereby transmit the door closing force to the output shaft 1 through the rotational motion-linear motion converting mechanism A. The moving speed of the piston 3 during the door closing action is controlled by adjusting a flow rate of the working oil of the piston front chamber 4 to a piston rear chamber 5 through a hydraulic control circuit (not shown).

The body case 6 is in the form of a longitudinal flat cylindrical shape. The body case 6 has, on its right end side, a main piston cylinder 6a which is liquid tightly sealed by a cylinder head 20 and, on its left side, a back check cylinder 6b which is liquid tightly sealed by a back check cylinder head 21. The back check cylinder 6b has, on its upper side, an opening which is liquid tightly closed by a lid plate 22 with the output shaft 1 projecting therethrough. The main piston 3 is received in the cylinder 6a. The back check cylinder 6b receives the back check piston 10 slidably. The piston front chamber 4 is defined between the piston 3 and the cylinder head 20. The piston rear chamber 5 is in fluid communication with the back check cylinder 6b through a bypass passage (not shown). The output shaft 1 is supported by a bearing 28 provided at a bottom of the body case 6 and a bearing 29 provided on the lid plate 22. The output shaft 1 is projected outwardly through the lid plate 22.

The rotational motion-linear motion converting mechanism A includes a cam mechanism connected to a connecting rod 30 whose front end 30a is loosely inserted into the main piston 3 and whose front end is connected to the main piston 3 through a pin 31. The piston 3 has a check valve 32 for only permitting the working oil to flow from the piston rear chamber 5 into the piston front chamber 4 when the door is opened.

The back check piston 10 has a check valve 35, and is urged by a spring 9 toward the main piston 3. The back check piston 10 functions to restrict the door opening motion by abutting the left end of the mechanism A when the door is quickly opened.

The structure and function of the main piston 3, the back check piston 6 and the rotationed motion-linear motion converting mechanism A are disclosed in an Application (Title: Floor Hinge) filed on 25th. November 1992 by the same applicant.

Next, the essential part of this invention will now be explained.

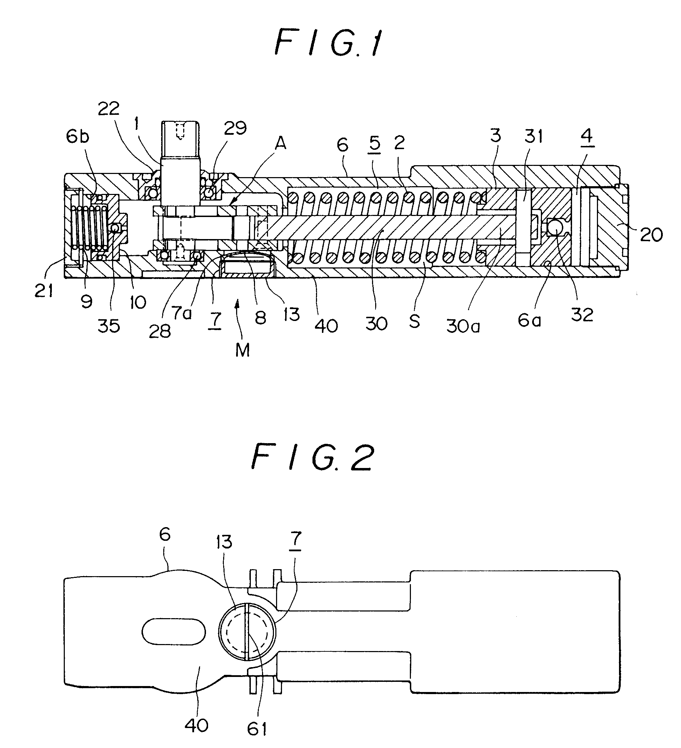

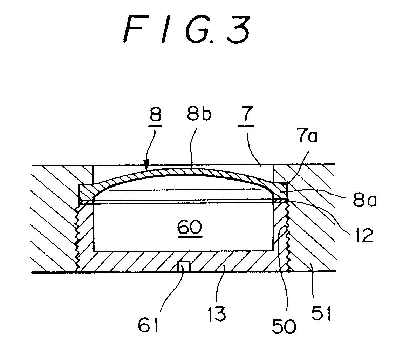

The floor hinge has an air absorption means M for absorbing increase of the working oil accommodated in the cylinder space S in a bottom plate 40 at the bottom of the body case 6. At a position, corresponding to the mechanism A, the bottom plate 40 is provided with an opening 7 as shown in FIGS. 1 and 3. The opening 7 has a step portion 7a to form an expanded opening under the step portion 7a. The inner wall of the expanded opening has a female screw 50. A diaphragm 8 is accommodated in the opening 7 in a state wherein a peripheral portion 8a of the diaphragm 8 is pushed toward the step portion 7a. The diaphragm 8 has a thin center portion which is arched spherically inwardly of the body case 6, and the peripheral portion 8a is formed thick in the shape of a ring. The diaphragm 8 is made of rubber, and the peripheral portion 8a of the diaphragm 8 is fastened to the step portion 7a by a plug 13 in the shape of a cup through a ring-like packing 12. The plug 13 has, at its outer wall, a male screw 51 to mesh with the female screw 50 of the inner wall of the opening 7. At the bottom wall of the plug 13 is provided a groove 61 into which a tool is inserted when the plug 13 is engaged with the opening 7. The diaphragm 8 and the plug 13 forms an air-sealed space 60. Therefore, when an oil pressure is increased in the piston rear chamber 5, the center portion 8b of the diaphragm 8b is concaved outwardly, and when the oil pressure is decreased in the piston rear chamber 5, the center portion 8b of the diaphragm 8 is returned to a convex shape as shown in FIG. 3. If the floor hinge is subject to sunlight especially during summer time to increase remarkably the temperature of the working oil in the piston rear chamber 5, the working oil is expanded to increase the oil pressure therein. At this time, the center portion 8b of the diaphragm 8 is concaved to compress the air in the space 60 formed with the diaphragm 8 and the plug 13. Therefore, a remarkable increase of the inner oil pressure in the piston rear chamber 5 can be effectively avoided to prevent the breakage of the body case 6 due to thermal expansion of the working oil. If the temperature of the floor hinge is decreased, the working oil is shrunk to decrease the oil pressure thereof. At this time, the air pressure of the space 60 pushes back the center portion 8b of the diaphragm 8 to return the diaphragm 8 to a state shown in FIG. 3. Therefore, no air is flown into the inside of the body case 6, the main piston 3 can be correctly controlled.

The oil pressure absorption means M may be formed on the front piston chamber 4.

## Claims

1. A floor hinge having a body case (6), an output shaft (1) projected from the body case (6) to be connected to a door, and a piston (3) connected to the output shaft (1) through a rotational motion-linear motion converting mechanism (A) for converting rotational motion of the output shaft (1) into linear motion of the piston (3), the piston (3) being moved reciprocatingly in the body case (6), and dividing a cylinder space (S) into two first and second piston chambers (4,5), working oil being moved between the two first and second piston chambers (4,5) in response to rotational movement of the output shaft (1), whereby the body case (6) is provided with an oil pressure absorption means (M) for absorbing increase of oil pressure due to expansion of the working oil, said oil pressure absorption means (M) comprising an opening (7) formed at a position corresponding to either of the two first and second piston chambers (4,5) in the body case (6), characterised in that said oil absorption means further comprises an elastic diaphragm (8) for closing said opening (7) and a plug (13) for fastening the diaphragm (8) in the opening (7), said plug (13) having a cup-like shape to form an air-sealed space in cooperation with the diaphragm (8), and said plug (13) being screw-engaged with the opening (7), and said opening (7) is provided with a step portion (7a) to which a peripheral portion (8a) of the diaphragm (8) is fastened.

2. A floor hinge according to claim 1, wherein said diaphragm (8) is made of rubber.

3. A floor hinge according to claim 1, wherein said peripheral portion (8a) is formed thick in the shape of a ring, and the peripheral portion (8a) is fastened to the step portion (7a) by the plug (13) through a ring-like packing (12).

4. A floor hinge according to claim 1, wherein said plug (13) has a bottom wall to which a groove (61) is formed into which a tool is inserted when the plug (13) is engaged with the opening (7).

## Patentansprüche

1. Fußboden-Türschließer mit einem Gehäuse (6), einer Ausgangswelle (1), die aus dem Gehäuse (6) zur Verbindung mit einer Tür hervorragt, und einem Kolben (3), der mit der Ausgangswelle (1) über einen Drehbewegung-Linearbewegung-Umsetzungsmechanismus (A) verbunden ist, der die Drehbewegung der Ausgangswelle (1) in eine Linearbewegung des Kolbens (3) umsetzt, wobei der Kolben (3) in dem Gehäuse (6) hin- und herbewegt wird und einen Zylinderraum (S) in eine erste und eine zweite Kolbenkammer (4,5) unterteilt, wobei Arbeitsöl zwischen der ersten und zweiten Kolbenkammer (4,5) in Abhängigkeit von der Drehbewegung der Ausgangswelle (1) bewegt wird, wobei das Gehäuse (6) mit einer Öldruck-Absorptionsvorrichtung (M) versehen ist, um ein Ansteigen des Öldrucks infolge der Ausdehnung des Arbeitsöls zu absorbieren, wobei die Öldruck-Absorptionsvorrichtung (M) eine Öffnung (7) aufweist, die an einer der ersten oder zweiten Kolbenkammer (4,5) entsprechenden Position in dem Gehäuse (6) angeordnet ist, dadurch gekennzeichnet, daß die Öl-Absorptionsvorrichtung des weiteren eine elastische Membran (8) zum Verschließen der Öffnung (7) und einen Stopfen (13) zur Befestigung der Membran (8) in der Öffnung (7) aufweist, wobei der Stopfen (13) eine tassenartige Form zur Bildung eines luftdichten Raumes im Zusammenwirken mit der Membran (8) besitzt und im Schraubeingriff mit der Öffnung (7) steht und wobei die Öffnung (7) mit einem gestuften Abschnitt (7a) versehen ist, an dem ein Umfangsabschnitt (8a) der Membran (8) befestigt ist.

2. Fußboden-Türschließer nach Anspruch 1, dadurch gekennzeichnet, daß die Membran (8) aus Gummi besteht.

3. Fußboden-Türschließer nach Anspruch 1, dadurch gekennzeichnet, daß der Umfangsabschnitt (8a) in Form eines verdickten Rings ausgebildet ist und an dem gestuften Abschnitt (7a) mittels des Stopfens (13) über eine ringartige Packung (12) befestigt ist.

4. Fußboden-Türschließer nach Anspruch 1, dadurch gekennzeichnet, daß der Stopfen (13) eine Bodenwand besitzt, in der eine Nut (61) ausgebildet ist, in die ein Werkzeug eingesetzt wird, wenn der Stopfen (13) mit der Öffnung (7) in Eingriff gebracht wird.

## Revendications

1. Ferme-porte de sol pourvu d'un carter (6), d'un arbre de sortie (1) en saillie par rapport au carter (6) à relier à une porte, et d'un piston (3) relié à l'arbre de sortie (1) par l'intermédiaire d'un mécanisme de conversion de mouvement de rotation en mouvement rectiligne (A), destiné à convertir le mouvement de rotation de l'arbre de sortie (1) en mouvement rectiligne du piston (3), le piston (3) se déplaçant de façon alternative dans le carter (6), et séparant un volume du cylindre (S) en deux première et seconde chambres de vérin (4, 5), de l'huile de service étant déplacée entre les deux première et seconde chambres de vérin (4, 5) en réponse au mouvement de rotation de l'arbre de sortie (1), dans lequel le carter (6) est équipé d'un moyen d'absorption de pression d'huile (M) destiné à absorber l'augmentation de pression d'huile due à la dilatation de l'huile de service, ledit moyen d'absorption de pression d'huile (M) comprenant une ouverture (7) formée à un emplacement correspondant à chacune des deux première et seconde chambres de vérin (4, 5) dans le carter (6), caractérisé en ce que ledit moyen d'absorption d'huile comprend en outre une membrane élastique (8) destinée à obturer ladite ouverture (7) et un bouchon (13) destiné à fixer la membrane (8) dans l'ouverture (7), ledit bouchon (13) étant en forme de coupe afin de constituer une poche d'air étanche en coopération avec la membrane (8), et ledit bouchon (13) étant assemblé par vissage dans l'ouverture (7), et en ce que ladite ouverture (7) est pourvue d'une partie en épaulement (7a) sur laquelle une partie périphérique (8a) de la membrane (8) est fixée.

2. Ferme-porte de sol selon la revendication 1, dans lequel ladite membrane (8) est réalisée en caoutchouc.

3. Ferme-porte de sol selon la revendication 1, dans lequel ladite partie périphérique (8a) est en forme d'anneau épais, et la partie périphérique (8a) est fixée sur la partie en épaulement (7a) à l'aide du bouchon (13) par l'intermédiaire d'une garniture d'étanchéité en forme d'anneau (12).

4. Ferme-porte de sol selon la revendication 1, dans lequel ledit bouchon (13) est pourvu d'une paroi inférieure sur laquelle une rainure (61) est formée dans laquelle un outil est inséré lorsque le bouchon (13) est engagé dans l'ouverture (7).
